# EUROPÄISCHE PATENTSCHRIFT

(11) **EP 2 219 116 B1**
(45) Veröffentlichungstag und Bekanntmachung des Hinweises auf die Patenterteilung: **10.09.2014**
(21) Anmeldenummer: 10000288.0
(22) Anmeldetag: 14.01.2010
(51) Int. Cl.: G06F 13/38, G05B 19/042, G06F 13/12, G05B 19/05, G05B 19/414

(54) **Kommunikationsmodul für ein Automatisierungssystem**
Communication module for an automation system
Module de communication pour un système d'automatisation

(30) Priorität: 13.02.2009 DE 102009008957
(43) Veröffentlichungstag der Anmeldung: 18.08.2010
(73) Patentinhaber: ABB AG, 68309 Mannheim (DE)
(72) Erfinder: Gaub, Gernot, Dipl.-Ing., 68766 Hockenheim (DE); Blei, Brigitte, 10405 Berlin (DE); Wilmers, Andreas, Dipl-Phys., 69123 Heidelberg (DE)

(56) Entgegenhaltungen:
- WO-A1-2006/136201
- WO-A2-2006/074019
- GB-A- 2 241 854
- US-A- 4 972 365
- US-A- 5 162 986
- US-A1- 2004 181 297
- US-A1- 2008 080 395

## Beschreibung

Die Erfindung betrifft ein Kommunikationsmodul gemäß Anspruch 1, wobei das Kommunikationsmodul mit einer übergeordneten Steuereinheit, auch als zentrale Steuereinheit bezeichnet, eines modular aufgebauten Automatisierungssystems zusammenarbeitet.

Automatisierungssysteme zur Steuerung eines technischen Prozesses sind beispielsweise in der GB 2 241 854 beschrieben und umfassen üblicherweise eine zentrale Steuereinheit. Die zentrale Steuereinheit kommuniziert über ein Kommunikationsmodul mit den Ein-/ Ausgabeeinheiten und/oder Feldgeräten des Automatisierungssystems.

Die US 2008/0080395 A1 zeigt ein Verfahren, eine Vorrichtung und hergestellte Erzeugnisse, die flexible Eingabe-/Ausgabegerätekommunikationen in einem Pro-zesssteuerungssystem zur Verfügung stellen. In einem Beispiel steuert ein Prozesssteuerungssystem eine Mehrzahl von Feldgeräten. Das Prozesssteuerungssystem weist ein Steuerungsgerät und eine Kommunikationsprotokollkomponente auf. Die Kommunikationsprotokollkomponente weist mindestens einen Kommunikationskanal auf, der selektiv konfigurierbar ist, mindestens ein erstes oder zweites Kommunikationsprotokoll zu verwenden und mit mindestens einem der Feldgeräte zu kommunizieren Gegenwärtig weisen die in modular aufgebauten Automatisierungssystemen eingesetzten Kommunikationsmodule zur Programmierung des Moduls und zur Kommunikation mit an das Kommunikationsmodul angeschlossenen Geräten zwei voneinander unabhängige, konfigurierbare, galvanisch getrennte serielle Schnittstellen auf, die als RS232- Schnittstellen ausgeführt sind.

Die seriellen Schnittstellen werden durch ein im Kommunikationsmodul abgelegtes Anwenderprogramm konfiguriert.

Eine der vorgesehenen Schnittstelle ist als Programmierschnittstelle zur Eingabe und zum Test des auf dem Kommunikationsmodul abgelegten Anwenderprogramms vorgesehen. Die andere Schnittstelle ist eine durch das Anwenderprogramm konfigurierbare Schnittstelle.

Das Anwenderprogramm wie auch Anwenderdaten werden in einem nullspannungssicheren Speicher, beispielsweise einem Flash-EPROM abgelegt.

Eine Übertragung und Programmierung des Anwenderprogramms und der Anwenderdaten von der Zentraleinheit, auch zentralen Steuereinheit genannt, direkt in das Kommunikationsmodul ist bei den gegenwärtig in modular aufgebauten Automatisierungssystemen eingesetzten Kommunikationsmodulen nicht vorgesehen.

Der Erfindung liegt die Aufgabe zugrunde, ein Kommunikationsmodul für ein modular aufgebauten Automatisierungssystem anzugeben, welches die zentrale Steuereinheit des Automatisierungssystems entlastet und insbesondere dafür geeignet ist, ein Anwenderprogramm direkt von der an das Kommunikationsmodul angeschlossen Zentraleinheit in das Kommunikationsmodul zu übertragen und zu programmieren.

Diese Aufgabe wird erfindungsgemäß durch ein Kommunikationsmodul der eingangs genannten Art mit den im Anspruch 1 angegebenen Merkmalen gelöst. Vorteilhafte Ausgestaltungen und Verbesserungen der erfindungsgemäßen Einrichtung sind in weiteren Ansprüchen und in der Beschreibung angegeben.

Das erfindungsgemäße Kommunikationsmodul für ein modular aufgebautes Automatisierungssystem umfasst eine vorzugsweise als Mikroprozessor ausgeführte Verarbeitungseinheit, eine damit zusammenwirkende nullspannungssichere Speichereinheit zur Ablage eines Anwenderprogramms und wenigstens zwei voneinander unabhängige, konfigurierbare, galvanisch getrennte serielle Schnittstellen, die durch die in der Speichereinheit abgelegte Anwenderprogramm konfigurierbar sind und dafür vorgesehen sind, Funktionen der Schnittstellen einer mit dem Kommunikationsmodul verbundenen zentralen Steuereinheit mit zu übernehmen, wenn diese nicht ausreichen.

Erfindungsgemäß ist das Kommunikationsmodul dafür eingerichtet, verschiedene Kommunikationsprotokolle auszuführen, wobei die dazu erforderlichen Treiber in der Speichereinheit des Kommunikationsmoduls abgelegt sind.

In einer bevorzugten Ausführungsform des erfindungsgemäßen Kommunikationsmoduls umfasst die Speichereinheit wenigstens zwei als Flash-EPROM und RAM ausgeführte Speicher, die dafür vorgesehen sind, sowohl das Anwenderprogramm als auch Anwenderdaten zu speichern und der Verarbeitungseinheit zur Ausführung bereitzustellen.

Vorzugsweise ist eine der seriellen Schnittstellen als Programmierschnittstelle zur Eingabe und zum Test des auf dem Kommunikationsmodul abgelegten Anwenderprogramms vorgesehen und die weitere serielle Schnittstelle ist als eine durch das Anwenderprogramm konfigurierbare Schnittstelle ausgeführt.

In einer vorteilhaften Ausführungsform des erfindungsgemäßen Kommunikationsmoduls weisen die seriellen Schnittstellen jeweils wenigstens zwei physikalische Schnittstellen auf, wobei die erste physikalische Schnittstelle beispielsweise als RS232- und die zweite physikalische Schnittstelle als RS485- Schnittstelle (z.B. für Multidrop-Bus-Anwendungen) ausgeführt sein kann.

Weiterhin ist vorgesehen die seriellen Schnittstellen ausschließlich als RS232-Schnittstelle oder RS485-Schnittstelle oder RS422-Schnittstelle auszuführen, wobei die verschiedenen Schnittstellen des Kommunikationsmoduls die gleiche oder verschiedene Ausführung haben können.

In einer besonderen Ausführungsform des erfindungsgemäßen Kommunikationsmoduls sind die seriellen Schnittstellen als RS232-Schnittstelle oder RS485-Schnittstelle oder RS422-Schnittstelle oder als ETHERNET Schnittstelle ausgeführt, wobei die verschiedenen Schnittstellen des Kommunikationsmoduls die gleiche oder verschiedene Ausführung haben können.

Die frei konfigurierbaren seriellen Schnittstellen sind für die Übertragung verschiedener Protokolle, wie beispielsweise Modbus, CS31-Bus, RCOM, RCOM+, COMLl, EPVS, SysLibCom und/oder Multi (Umschaltung zwischen zwei verschiedenen Protokollen wie z.B. Modbus, ASCII, SysLibCom) vorgesehen.

Der Informationsaustausch des Kommunikationsmoduls über seine seriellen Schnittstellen kann in vorteilhafter Weise auch über den Standardcode ASCII (American Standard Code for Information Interchange) ausgeführt werden.

Das Anwenderprogramm ist erfindungsgemäß über einen zusätzlichen Programmierzugang des Kommunikationsmoduls programmierbar, wobei der Programmierzugang beispielsweise als Dual-Port-RAM (DPR) ausgeführt und direkt mit der zentralen Steuereinheit des Automatisierungssystems verbunden ist.

In vorteilhafter Weise ist durch den zusätzlichen Programmierzugang zur zentralen Steuereinheit die Verwendung eines einzigen Programmierwerkzeuges für die Zentraleinheit und das Kommunikationsmodul möglich.

Anhand der in der folgenden Figuren dargestellten Ausführungsbeispielen sollen die Erfindung sowie vorteilhafte Ausgestaltungen und Verbesserungen der Erfindung näher erläutert und beschrieben werden.

Es zeigen:
- **Fig. 1**: eine beispielhafte Ausführungsform des erfindungsgemäßen Kommunikationsmoduls, und
- **Fig. 2**: eine weitere beispielhafte Ausführungsform des erfindungsgemäßen Kommunikationsmoduls.

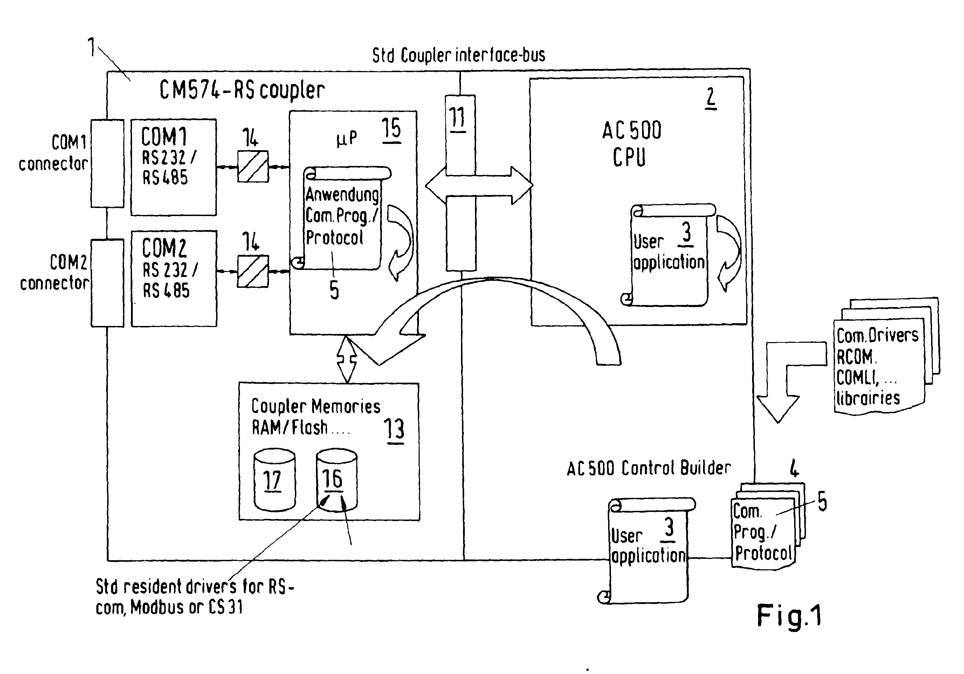

**Fig. 1** zeigt eine Ausführungsform des erfindungsgemäßen Kommunikationsmoduls 1 für ein modular aufgebautes Automatisierungssystem mit einem Mikroprozessor 15 zur Ausführung eines Anwenderprogramms 5, mit einer damit zusammenwirkenden aus einem nullspannungssicheren Speicher 16 und einem flüchtigen Speicher 17 aufgebauten Speichereinheit 13, wobei im ersten als Flash-EPROM ausgeführte Speicher 16 beispielsweise das Anwenderprogramm 5, Anwenderdaten, Kommunikationsprotokolle 5 und Kommunikationsprogramme 5 und im Speicher 16 standardisierte Treiber für im Kommunikationsmodul 1 vorgesehene serielle Schnittstellen COM1, COM2 und für verschiedene Protokolle, wie beispielsweise Modbus- oder CS31-Bus abgelegt sind. Die in dem Speicher 16 abgelegten Anwenderprogramme 5, Anwenderdaten, Kommunikationsprotokolle 5, Kommunikationsprogramme 5 und Treiber werden zur Ausführung in den RAM Speicher 17 geladen und dem Mikroprozessor 15 zur Verarbeitung bereitgestellt.

Der Mikroprozessor 15 ist mit zwei voneinander unabhängige, konfigurierbare, seriellen Schnittstellen COM1, COM2 zur Datenübertragung, insbesondere zur Programmierung des Kommunikationsmoduls 1 und zur Kommunikation mit an das Kommunikationsmodul 1 angeschlossenen Geräten verbunden. Die erste Schnittstelle COM1 und die zweite Schnittstelle COM2 sind voneinander galvanisch getrennt, wobei die galvanische Trennung beispielsweise mittels zwei digitalen Isolatoren 14 erfolgen kann.

Die erste Schnittstelle COM 1 ist als Programmierschnittstelle zur Eingabe und zum Test des auf dem Kommunikationsprozessor 1 abgelegten Anwenderprogramms 3 vorgesehen und die zweite serielle Schnittstelle COM2 ist als eine durch das Anwenderprogramm 3 konfigurierbare Schnittstelle ausgeführt.

Die seriellen Schnittstellen COM1, COM2 weisen erfindungsgemäß jeweils neben einer ersten der physikalischen Schnittstelle RS232 eine weitere physikalische Schnittstelle RS485, beispielsweise für für Multidrop-Bus-Anwendungen, auf. Die Schnittstellen sind für Standardprotokolle, wie beispielsweise ASCII, Modbus, CS31-Bus, RCOM, RCOM+, COMLI, EPVS, SysLibCom und/oder Multi (Umschaltung zwischen zwei verschiedenen Protokollen wie z.B. Modbus, ASCII, SysLibCom) vorgesehen.

Bei einer besondere Ausführungsform des erfindungsgemäßen Kommunikationsmoduls sind eine oder mehrere der seriellen Schnittstellen als CS31-Bus- Schnittstelle konfiguriert, wobei Prozessdaten von an die CS31-Bus- Schnittstellen angeschlossenen Ein-/Ausgabegeräte über den Programmierzugang 11 entsprechend einer Konfiguration des Anwenderprogramms 3 der Zentraleinheit 2 zur Verfügung gestellt werden.

In einer weiteren Ausführung des erfindungsgemäßen Kommunikationsmoduls ist vorgesehen, eine oder mehrere der seriellen Schnittstellen als Modbus- Schnittstelle oder andere feste Protokollschnittstelle zu konfigurierten und die Daten der an die seriellen Schnittstellen angeschlossenen Ein-/Ausgabegeräte über den Programmierzugang 11 entsprechend der Konfiguration des Anwenderprogramms 3 in die Zentraleinheit 2 zu übertragen.

Das Anwenderprogramm 5 ist über einen zusätzlichen Programmierzugang 11 des Kommunikationsmoduls 1 programmierbar, wobei der Programmierzugang 11 beispielsweise über einen Dual-Port-RAM (DPR) mit einer zentralen Steuereinheit 2 des Automatisierungssystems verbunden ist. Somit sind Kommunikationsmodul 1 und zentrale Steuereinheit 2 mittels eines einzigen Programmierwerkzeuges 4 programmierbar.

Das Programmierwerkzeug 4 ist ein Programmierwerkzeug zur Programmierung von speicherprogrammierbaren Steuerungen (SPS). Das Kommunikationsmodul wird somit in vorteilhafter Weise wie eine SPS nach IEC61131 programmiert. Damit ist es möglich im Kommunikationsmodul ein SPS- Anwenderprogramm abzulegen, dass über die Schnittstellen COM1, COM2 mit dezentralen Ein-/Ausgabegeräten zur Erfassung von Prozessdaten bzw. Ansteuerung von Aktoren verbunden ist.

Die im Programmierwerkzeug 4 zur Verfügung gestellten Programmiersprachen und Befehle und Bibliotheken und Debug-Möglichkeiten sind in gleicher Weise für das Kommunikationsmodul 1 wie auch für die Zentraleinheit 2 verwendbar.

Das Kommunikationsmodul 1 ist auch dafür vorgesehen, über das Dual-Port-RAM (DPR) 11 mittels zyklisch konfigurierbaren Ein-/Ausgabedaten und/oder azyklisch über sogenannte Messages mit dem Anwenderprogramm 3 der Zentraleinheit 2 zu kommunizieren.
In einer besonderen Ausführungsform des erfindungsgemäßen Kommunikationsmoduls sind die seriellen Schnittstellen als RS232-Schnittstelle oder RS485-Schnittstelle oder RS422-Schnittstelle oder als ETHERNET Schnittstelle ausgeführt, wobei die verschiedenen Schnittstellen des Kommunikationsmoduls die gleiche oder verschiedene Ausführung haben können.

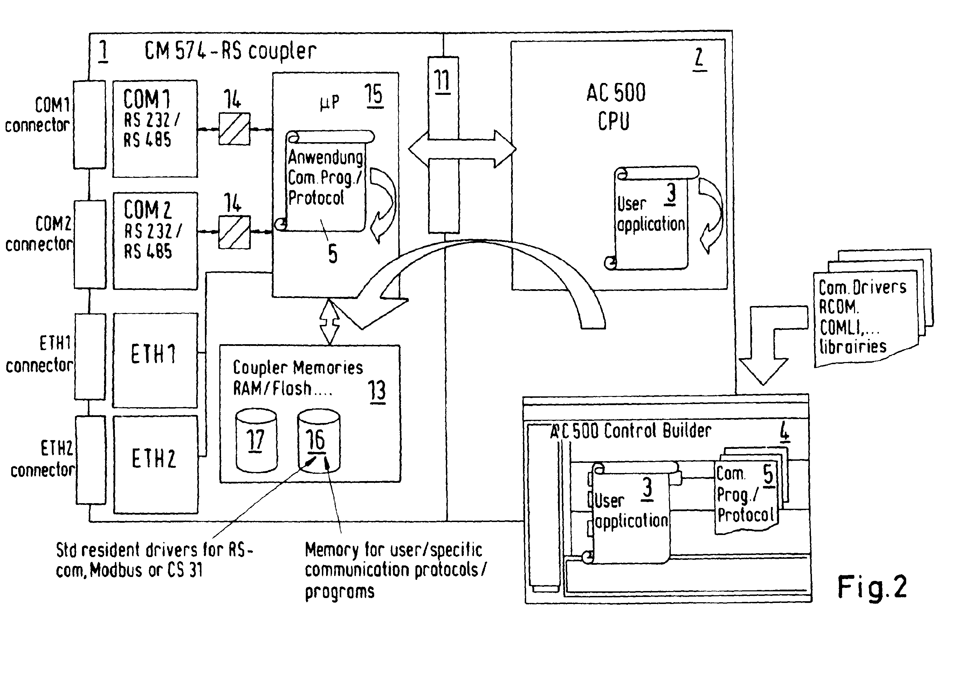

**Fig. 2** zeigt eine weitere Ausführungsform des erfindungsgemäßen Kommunikationsmoduls 1, welches sich dadurch von der Ausführung des Kommunikationsmoduls 1gemäß **Fig. 1** unterscheidet, dass die seriellen Schnittstellen COM1, COM2 auch als ETHERNET- Schnittstelle ETH1, ETH2 ausgeführt sein können.

## Patentansprüche

1. Kommunikationsmodul mit einer Verarbeitungseinheit (15), mit wenigstens einer damit zusammenwirkenden Speichereinheit (13) zur Ablage eines Anwenderprogramms (5) und wenigstens einer oder mehreren seriellen Schnittstellen (COM1, COM2), die durch das in der Speichereinheit (13) abgelegte Anwenderprogramm (5) konfigurierbar sind, wobei das Kommunikationsmodul mit einer zentralen Steuereinheit (2) eines modular aufgebauten Automatisierungssystems verbindbar ist, **dadurch gekennzeichnet, dass**
- das Anwenderprogramm (5) über einen mit der zentralen Steuereinheit (2) verbundenen Programmierzugang (11) des Kommunikationsmoduls übertragbar und programmierbar ist,
- der Programmierzugang (11) als Dual-Port-RAM ausgeführt ist,
- das Kommunikationsmodul (1) von der zentralen Steuereinheit (2) über den Programmierzugang (11) mittels eines einzigen Programmierwerkzeuges (4) programmierbar ist,
- das Programmierwerkzeug (4) zur Programmierung speicherprogrammierbarer Steuerungen vorgesehen ist und das Kommunikationsmodul mittels des Programmierwerkzeug (4) über den Programmierzugang (11) wie die speicherprogrammierbare Steuerung nach IEC61131 programmierbar ist,
- ein im Kommunikationsmodul abgelegtes SPS- Anwenderprogramm über die seriellen Schnittstellen (COM1, COM2) mit dezentralen Ein-/Ausgabegeräten zur Erfassung von Prozessdaten bzw. zur Ansteuerung von Aktoren kommuniziert.

2. Kommunikationsmodul nach Anspruch 1, **dadurch gekennzeichnet, dass** die seriellen Schnittstellen (COM1, COM2) jeweils zusätzlich zu einer RS232-Schnittstelle auch eine weitere RS485-Schnittstelle und/oder RS422-Schnittstelle aufweisen.

3. Kommunikationsmodul nach Anspruch 1, **dadurch gekennzeichnet, dass** die seriellen Schnittstellen (COM1, COM2) als RS232-Schnittstelle oder RS485-Schnittstelle oder RS422-Schnittstelle ausgeführt sind.

4. Kommunikationsmodul nach Anspruch 1, **dadurch gekennzeichnet, dass** die seriellen Schnittstellen (COM1, COM2) als RS232-Schnittstelle und/oder RS485-Schnittstelle und/oder RS422-Schnittstelle und/oder als ETHERNET- Schnittstelle (ETH1, ETH2) ausgeführt sind.

5. Kommunikationsmodul nach einem der vorherigen Ansprüche, **dadurch gekennzeichnet, dass** die im Programmierwerkzeug 4 zur Verfügung gestellten Programmiersprachen, Befehle, Bibliotheken und Debug- Möglichkeiten für die Programmierung des Kommunikationsmodul 1 verwendbar sind.

6. Kommunikationsmodul nach einem der vorherigen Ansprüche, **dadurch gekennzeichnet, dass** die Speichereinheit (13) aus einem nullspannungssicheren FlashEPROM (16) und/oder einem RAM (17) gebildet ist.

7. Kommunikationsmodul, nach einem der vorherigen Ansprüche, **dadurch gekennzeichnet, dass** eine der seriellen Schnittstellen als Programmierschnittstelle zur Eingabe und zum Test des auf dem Kommunikationsmodul abgelegten Anwenderprogramms vorgesehen und die weitere serielle Schnittstelle als eine durch das Anwenderprogramm konfigurierbare Schnittstelle ausgeführt ist.

8. Kommunikationsmodul, nach einem der vorherigen Ansprüche, **dadurch gekennzeichnet, dass** die seriellen Schnittstellen (COM1, COM2) als durch das Anwenderprogramm (5) konfigurierbare Schnittstellen ausgeführt sind.

9. Kommunikationsmodul, nach einem der vorherigen Ansprüche, **dadurch gekennzeichnet, dass** eine oder mehrere der seriellen Schnittstellen als CS31-Bus Schnittstelle konfiguriert sind und Prozessdaten von an die CS31-Bus Schnittstellen angeschlossenen Ein-/Ausgabegeräte über den Programmierzugang (11) entsprechend einer Konfiguration des Anwenderprogramms (3) der zentralen Steuereinheit (2) zur Verfügung stehen.

10. Kommunikationsmodul, nach einem der Ansprüche 1 bis 11, **dadurch gekennzeichnet, dass** eine oder mehrere der seriellen Schnittstellen als ModbusSchnittstelle oder feste Protokollschnittstellen konfiguriert sind und die Daten der an die seriellen Schnittstellen angeschlossenen Ein-/Ausgabegeräte über den Programmierzugang (11) entsprechend der Konfiguration des Anwenderprogramms (3) der zentralen Steuereinheit (2) zur Verfügung stehen.

11. Kommunikationsmodul, nach einem der vorherigen Ansprüche, **dadurch gekennzeichnet, dass** die vom Programmierwerkzeug (4) zur Verfügung gestellten Programmiersprachen, Befehle, Bibliotheken und/oder Debug-Möglichkeiten sowohl für das Kommunikationsmodul als auch für die zentralen Steuereinheit (2) verwendbar sind.

12. Kommunikationsmodul, nach einem der vorherigen Ansprüche, **dadurch gekennzeichnet, dass** das Kommunikationsmodul über den Programmierzugang (11) mittels zyklisch konfigurierbaren Ein-/Ausgabedaten und/oder azyklisch über Messages mit dem Anwenderprogramm (3) der zentralen Steuereinheit (2) kommuniziert.

## Claims

1. Communication module having a processing unit (15), having at least one memory unit (13) which cooperates with the latter and is intended to store a user program (5), and having at least one or more serial interfaces (COM1, COM2) which can be configured by the user program (5) stored in the memory unit (13), the communication module being able to be connected to a central control unit (2) of an automation system of modular construction, **characterized in that**
- the user program (5) can be transmitted and programmed via a programming access (11) of the communication module, which programming access is connected to the central control unit (2), the programming access (11) is in the form of a dual-port RAM, the communication module (1) can be programmed by the central control unit (2) via the programming access (11) using a single programming tool (4), the programming tool (4) is intended to program programmable logic controllers, and the communication module can be programmed like the programmable logic controller according to IEC61131 via the programming access (11) using the programming tool (4), a PLC user program stored in the communication module communicates with decentralized input/output devices via the serial interfaces (COM1, COM2) in order to acquire process data or to drive actuators.

2. Communication module according to Claim 1, **characterized in that** the serial interfaces (COM1, COM2) each also have, in addition to an RS232 interface, a further RS485 interface and/or an RS422 interface.

3. Communication module according to Claim 1, **characterized in that** the serial interfaces (COM1, COM2) are in the form of an RS232 interface or an RS485 interface or an RS422 interface.

4. Communication module according to Claim 1, **characterized in that** the serial interfaces (COM1, COM2) are in the form of an RS232 interface and/or an RS485 interface and/or an RS422 interface and/or an Ethernet interface (ETH1, ETH2).

5. Communication module according to one of the preceding claims, **characterized in that** the programming languages, instructions, libraries and debug options provided in the programming tool (4) can be used to program the communication module (1).

6. Communication module according to one of the preceding claims, **characterized in that** the memory unit (13) is formed from a non-volatile flash EPROM (16) and/or a RAM (17).

7. Communication module according to one of the preceding claims, **characterized in that** one of the serial interfaces is provided as a programming interface for inputting and testing the user program stored on the communication module, and the further serial interface is in the form of an interface which can be configured by the user program.

8. Communication module according to one of the preceding claims, **characterized in that** the serial interfaces (COM1, COM2) are in the form of interfaces which can be configured by the user program (5).

9. Communication module according to one of the preceding claims, **characterized in that** one or more of the serial interfaces are configured as a CS31 bus interface, and process data from input/output devices connected to the CS31 bus interface are available to the central control unit (2) via the programming access (11) according to a configuration of the user program (3).

10. Communication module according to one of Claims 1 to 9, **characterized in that** one or more of the serial interfaces are configured as a Modbus interface or fixed protocol interfaces, and the data from the input/output devices connected to the serial interfaces are available to the central control unit (2) via the programming access (11) according to the configuration of the user program (3) .

11. Communication module according to one of the preceding claims, **characterized in that** the programming languages, instructions, libraries and/or debug options provided by the programming tool (4) can be used both for the communication module and for the central control unit (2).

12. Communication module according to one of the preceding claims, **characterized in that** the communication module communicates with the user program (3) of the central control unit (2) via the programming access (11) using cyclically configurable input/output data and/or acyclically using messages.

## Revendications

1. Module de communication comprenant une unité de traitement (15), doté d'au moins une unité de mémoire (13) qui coopère avec celle-ci pour le stockage d'un programme d'utilisateur (5) et au moins une ou plusieurs interfaces série (COM1, COM2) qui peuvent être configurées par le biais du programme d'utilisateur (5) stocké dans l'unité de mémoire (13), le module de communication pouvant être relié avec une unité de commande centrale (2) d'un système d'automatisation de construction modulaire, **caractérisé en ce que**
- le programme d'utilisateur (5) est transmissible et programmable par le biais d'un accès de programmation (11) du module de communication relié avec l'unité de commande centrale (2),
- l'accès de programmation (11) est réalisé sous la forme d'une RAM à double port,
- le module de communication (1) est programmable par l'unité de commande centrale (2) par le biais de l'accès de programmation (11) à l'aide d'un unique outil de programmation (4),
- l'outil de programmation (4) est prévu pour la programmation des automates programmables industriels et le module de communication est programmable à l'aide de l'outil de programmation (4) par le biais de l'accès de programmation (11) conformément à la norme CEI 61131, comme l'automate programmable industriels,
- un programme d'utilisateur SPS stocké dans le module de communication communique par le biais des interfaces série (COM1, COM2) avec des appareils d'entrée/sortie décentralisés pour acquérir des données de procédé ou pour commander des actionneurs.

2. Module de communication selon la revendication 1, **caractérisé en ce que** les interfaces série (COM1, COM2) présentent respectivement, en plus d'une interface RS232, également une interface RS485 et/ou une interface RS422 supplémentaire(s).

3. Module de communication selon la revendication 1, **caractérisé en ce que** les interfaces série (COM1, COM2) sont réalisées sous la forme d'interfaces RS232 ou d'interfaces RS485 ou d'interfaces RS422.

4. Module de communication selon la revendication 1, **caractérisé en ce que** les interfaces série (COM1, COM2) sont réalisées sous la forme d'interfaces RS232 et/ou d'interfaces RS485 et/ou d'interfaces RS422 et/ou d'interfaces Ethernet (ETH1, ETH2).

5. Module de communication selon l'une des revendications précédentes, **caractérisé en ce que** les langages de programmation, les instructions, les bibliothèques et les possibilités de débogage mis à disposition dans l'outil de programmation (4) peuvent être utilisés pour la programmation du module de communication (1).

6. Module de communication selon l'une des revendications précédentes, **caractérisé en ce que** l'unité de mémoire (13) est constituée d'une EPROM Flash permanente (16) et/ou d'une RAM (17).

7. Module de communication selon l'une des revendications précédentes, **caractérisé en ce que** l'une des interfaces série est prévue comme interface de programmation pour la saisie et le test du programme d'utilisateur stocké sur le module de communication et l'autre interface série est réalisée sous la forme d'une interface configurable par le programme d'utilisateur.

8. Module de communication selon l'une des revendications précédentes, **caractérisé en ce que** les interfaces série (COM1, COM2) sont réalisées sous la forme d'interfaces configurables par le programme d'utilisateur (5).

9. Module de communication selon l'une des revendications précédentes, **caractérisé en ce qu'**une ou plusieurs des interfaces série sont configurées en tant qu'interfaces de bus CS31 et les données de procédé des appareils d'entrée/sortie raccordés aux interfaces de bus CS31 sont à la disposition de l'unité de commande centrale (2) par le biais de l'accès de programmation (11) conformément à une configuration du programme d'utilisateur (3).

10. Module de communication selon l'une des revendications 1 à 9, **caractérisé en ce qu'**une ou plusieurs des interfaces série sont configurées en tant qu'interfaces Modbus ou interfaces de protocole fixes et les données des appareils d'entrée/sortie raccordés aux interfaces série sont à la disposition de l'unité de commande centrale (2) par le biais de l'accès de programmation (11) conformément à la configuration du programme d'utilisateur (3).

11. Module de communication selon l'une des revendications précédentes, **caractérisé en ce que** les langages de programmation, les instructions, les bibliothèques et/ou les possibilités de débogage mis à disposition par l'outil de programmation (4) peuvent être utilisés à la fois pour le module de communication et pour l'unité de commande centrale (2).

12. Module de communication selon l'une des revendications précédentes, **caractérisé en ce que** le module de communication communique avec le programme d'utilisateur (3) de l'unité de commande centrale (2) par le biais de l'accès de programmation (11) à l'aide de données d'entrée/sortie configurables de manière cyclique et/ou de manière acyclique par le biais de messages.
